(19) **Europäisches Patentamt European Patent Office Office européen des brevets**

(11) **EP 2 900 458 B1**

(12) **FASCICULE DE BREVET EUROPEEN**

(45) Date de publication et mention
de la délivrance du brevet:
**20.12.2017 Bulletin 2017/51**

(21) Numéro de dépôt: **13785491.5**

(22) Date de dépôt: **26.09.2013**

(51) Int Cl.:
*B29C 70/88* (2006.01)      *G01N 23/04* (2006.01)
*G01N 23/083* (2006.01)     *B29C 70/62* (2006.01)
*B29K 505/00* (2006.01)     *B29C 70/48* (2006.01)

(86) Numéro de dépôt international:
**PCT/FR2013/052281**

(87) Numéro de publication internationale:
**WO 2014/049283 (03.04.2014 Gazette 2014/14)**

(54) **PROCEDE D'IDENTIFICATION ET/OU DE SUIVI DE LA DEFORMATION D'UNE PIECE DE TURBOMACHINE**

**VERFAHREN ZUR IDENTIFIZIERUNG UND/ODER ÜBERWACHUNG DER VERFORMUNG EINES BAUTEILS EINER STRÖMUNGSMASCHINE**

**METHOD FOR IDENTIFYING AND/OR MONITORING THE DEFORMATION OF A TURBOMACHINE PART**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.09.2012 FR 1259237**

(43) Date de publication de la demande:
**05.08.2015 Bulletin 2015/32**

(73) Titulaire: **Snecma**
**75015 Paris (FR)**

(72) Inventeurs:
• **SCHNEIDER, Julien**
**F-77550 Moissy Cramayel Cedex (FR)**
• **MOLLIEX, Ludovic, Edmond, Camille**
**F-77550 Moissy Cramayel Cedex (FR)**

(74) Mandataire: **Jolly, Christophe et al**
**Ernest Gutmann - Yves Plasseraud SAS**
**3, rue Auber**
**75009 Paris (FR)**

(56) Documents cités:
**EP-A1- 0 905 509      EP-A2- 0 503 940**
**FR-A1- 2 971 970      US-A1- 2012 025 827**

**Description**

La présente invention concerne un procédé d'identification et/ou de suivi des déformations d'une pièce mécanique d'une turbomachine, telle qu'un turboréacteur ou un turbopropulseur d'avion.

A l'heure actuelle, de nombreuses techniques de contrôle non destructif, permettent d'effectuer un suivi de la déformation des pièces de turbomachine pour connaitre l'évolution de leur structure au cours du temps.

Toutefois, ces techniques, telles que le ressuage par exemple, ne permettent de contrôler que la surface des pièces et ne renseignent pas sur les déformations internes de la pièce. Ainsi, à la suite d'un incident tel qu'un choc ou dans le cadre d'une opération de maintenance, il est possible de déterminer la présence ou non de fissures sur la surface d'une pièce par exemple mais il n'est pas possible de connaitre l'état de la structure interne de la pièce.

De plus, afin d'effectuer le suivi de pièces mécaniques, il est important de pouvoir différencier les pièces les unes des autres. En particulier, lorsqu'un procédé de contrôle non destructif est appliqué à une série de pièces similaires telles que des aubes de soufflante ou de compresseur par exemple, il faut pouvoir différencier les pièces les unes des autres pour assurer un suivi individuel de chaque pièce. A l'heure actuelle, on est obligé d'avoir recours à des procédés de marquage externe (inscription de numéros d'identification ou collage d'étiquette) qui permettent d'identifier les pièces et de les distinguer les unes des autres tant que leurs marques d'identification ne sont pas détruites ou illisibles.

Il est connu d'utiliser la technique de tomographie à rayons X pour obtenir des informations sur la structure interne d'une pièce. Toutefois, cette technique n'est pas applicable à l'identification et/ou au suivi de la déformation de pièces de turbomachine, en particulier de pièces en matériau composite.

Le document FR 2 971 970 décrit un procédé dans lequel une préforme tissée d'une pièce est placée dans un moule pour imprégnation par de la résine et un circuit du type « RFID » est installé dans ou sur la préforme pour qu'il soit inclus de façon définitive dans la résine.

Le document EP 0 905 509 décrit un procédé de contrôle d'une pièce par tomographie.

Le document US 2012/0025827 décrit un procédé de suivi de la déformation d'une pièce, utilisant la résonance quadripolaire nucléaire.

L'invention a notamment pour but d'apporter une solution simple, efficace et économique aux problèmes précités.

A cette fin, elle propose un procédé d'identification et/ou de suivi des déformations d'une pièce mécanique en matériau composite pour turbomachine, la pièce comprenant une préforme en matériau fibreux et une résine, caractérisé en ce qu'il consiste à :

- incorporer des particules métalliques à la préforme et/ou à la résine lors de la fabrication de la pièce ;
- soumettre la pièce mécanique à un premier contrôle par rayons X de manière à obtenir une première information relative aux positions des particules à sein de la pièce ; puis
- soumettre la pièce mécanique à un deuxième contrôle par rayons X à un instant ultérieur de manière à obtenir une seconde information relative aux positions des particules à sein de la pièce ; et
- identifier la pièce et/ou déduire la déformation de sa structure interne par comparaison des première et seconde informations relatives aux positions des particules au sein de la pièce obtenues avec les premier et second contrôles par rayons X, respectivement.

Dans le procédé selon l'invention, les particules métalliques intégrées à la pièce mécanique, forment un motif tridimensionnel au sein de la pièce qu'il est possible de détecter par rayons X du fait de l'atténuation des rayons X par les particules métalliques.

Lorsque l'opération de contrôle par rayons X consiste en l'acquisition d'une unique image d'atténuation au travers de la pièce, l'information relative aux positions des particules est obtenue par visualisation des positions des particules sur l'image d'atténuation. En comparant les deux images d'atténuation obtenues avec les premier et second contrôle par rayons X, il est ainsi possible, lorsque les particules sont agencées de manière unique d'identifier la pièce parmi d'autres.

Selon une autre caractéristique de l'invention, les premier et second contrôle par rayons X consistent en des contrôles par tomographie à rayons X de manière à obtenir des premier et second relevés tridimensionnels des positions des particules métalliques au sein de la pièce, respectivement.

La tomographie par rayons X permet d'accéder aux positions réelles dans l'espace des particules métalliques au sein de la pièce.

Lorsque les particules sont agencées d'une manière unique à l'intérieur de la pièce, ce relevé tridimensionnel permet d'une part d'identifier la pièce mécanique et d'autre part d'obtenir une représentation tridimensionnelle de la structure interne de la pièce.

En effectuant un autre contrôle par tomographie à rayons X à un instant ultérieur, on obtient un autre relevé tridimensionnel des positions des particules métalliques qui peut être comparé au premier relevé afin d'identifier la pièce. De plus, la comparaison des relevés tridimensionnels permet de visualiser les déformations internes de la pièce entre les instants de deux relevés.

Avantageusement, la première information est obtenue sur la pièce mécanique préalablement à toute utilisation de celle-ci, ce qui permet d'avoir une indication relative à l'état de la structure interne de la pièce avant toute utilisation, c'est-à-dire à l'état sans déformation.

Dans le cas d'un contrôle par tomographie par rayons X, l'information obtenue consiste en le relevé tridimensionnel des positions des particules métalliques au sein de la pièce. Il est ainsi possible de connaitre précisément l'état de la structure interne tridimensionnel de la pièce avant utilisation.

Dans une première mise en oeuvre du procédé selon l'invention, au moins certaines des particules métalliques sont introduites dans un canal d'écoulement d'un flux de résine dont l'extrémité aval débouche à l'intérieur d'un moule logeant la préforme en matériau fibreux.

Avantageusement, le procédé comprend des moyens de contrôle du débit de particules métalliques dans le flux de résine. De cette manière, il est possible de contrôler la répartition des particules à l'intérieur de la préforme au fur et à mesure de l'incorporation de la résine dans la préforme, et de créer un agencement tridimensionnel souhaité des particules à l'intérieur de la pièce.

Dans une seconde mise en oeuvre du procédé selon l'invention, au moins certaines des particules métalliques sont déposées sur la préforme avant injection de la résine.

En comparaison de la méthode précédente, cette seconde méthode permet de contrôler plus précisément le positionnement des particules sur la pièce et d'obtenir une répartition plus précise des particules sur la préforme.

De façon pratique, les particules peuvent être déposées sur la préforme au moyen d'un tamis comprenant une pluralité d'orifices de diamètres différents répartis selon un motif prédéterminé.

Le motif prédéterminé des orifices participe à la répartition des particules sur la préforme, ce qui permet de créer un motif unique de particules de dimensions données sur la préforme permettant son identification par contrôle par rayons X.

Avantageusement, le procédé consiste à donner une ou des orientations prédéterminées aux particules par application d'un champ magnétique. L'utilisation d'un champ magnétique est particulièrement intéressante dans le cas où les particules sont introduites dans le moule au moyen du flux de résine. Le contrôle du flux magnétique permet ainsi de modifier la viscosité et la vitesse du flux de résine à l'intérieur du moule, modifiant ainsi la répartition des particules dans la préforme.

Les particules ont préférentiellement une densité supérieure à celles de la préforme et de la résine, ce qui permet que les particules métalliques atténuent plus fortement les rayons X que la préforme et la résine et ainsi de bien les distinguer.

Elles peuvent être un matériau métallique choisi parmi le titane, le nickel, l'aluminium, le chrome et le fer.

Les particules métalliques sont avantageusement de forme sphérique et ont un diamètre compris entre environ quelques dizaines de microns et quelques centaines de microns, par exemple entre 20 microns et 300 microns. Préférentiellement, les particules ont un diamètre compris entre 20 et 50 $\mu$m de manière à ce que les particules n'impactent pas la tenue mécanique des aubes.

Dans des réalisations particulières de l'invention, le matériau composite est à matrice céramique ou à matrice organique et la pièce est une aube de turbomachine.

D'autres avantages et caractéristiques de l'invention apparaîtront à la lecture de la description suivante faite à titre d'exemple non limitatif et en référence aux dessins annexés dans lesquels :

- la figure 1 est une représentation schématique en perspective d'un dispositif de mesure par tomographie à rayons X ;
- la figure 2 est une représentation schématique d'une première mise en oeuvre du procédé selon l'invention ;
- la figure 3 est une représentation schématique d'une seconde mise en oeuvre du procédé selon l'invention.

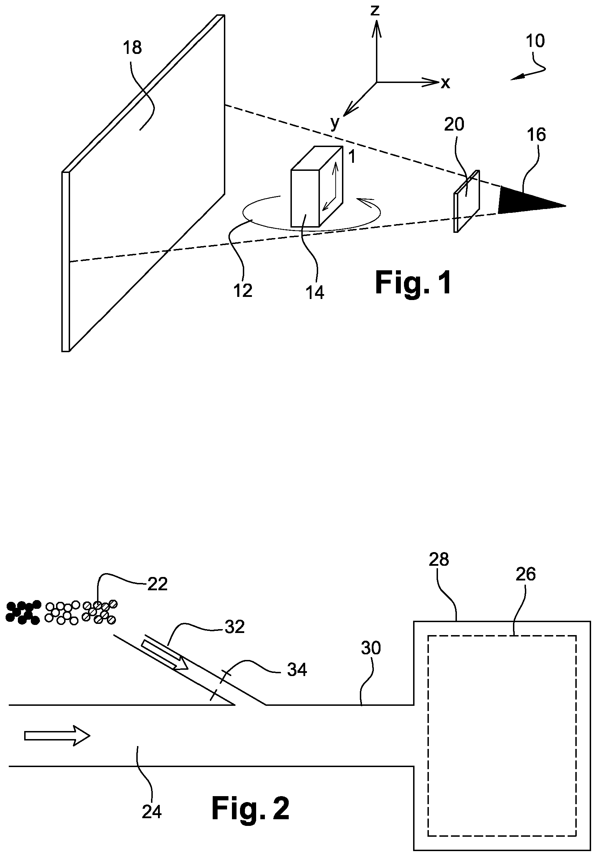

On se réfère tout d'abord à la figure 1 qui représente un dispositif 10 de contrôle non destructif d'une pièce mécanique par tomographie à rayons X. Ce dispositif 10 comprend un support 12 qui est mobile en rotation autour d'un axe Z perpendiculaire à un plan XY et sur lequel est montée une pièce mécanique 14 à analyser. La pièce 14 est intercalée entre une source 16 de rayons X émettant un faisceau de rayons X traversant la pièce 14 et un détecteur plan 18 formé d'une pluralité de détecteurs élémentaires. Un filtre 20 est intercalé entre la source 16 de rayons X et la pièce mécanique 14 de manière à empêcher le passage de rayons X à des niveaux d'énergie non nécessaires. Ce filtre 20 est formé par une plaque métallique par exemple en cuivre d'une épaisseur de l'ordre de 0,1 millimètre. Ce type de dispositif 10 est bien connu de l'homme du métier et ne sera pas décrit plus en détail.

La tomographie à rayons X consiste à diriger le faisceau de rayons X à travers la pièce 14 et à acquérir avec le détecteur 18 une image des rayons X atténués au travers de la pièce 14. Dans un second temps, le support mobile 12 est tourné d'un angle prédéterminé et on effectue une nouvelle acquisition des rayons X à travers la pièce 14. L'opération précédente est répétée n fois jusqu'à ce que le support mobile 12 ait effectué une rotation complète sur 360°. Dans une réalisation pratique, une acquisition complète sur 360° permet d'obtenir environ 2000 images.

Par la suite les images d'atténuation obtenues aux différentes positions angulaires de la pièce 14 par rapport à la source 16 de rayons X sont transférées vers un dispositif d'analyse, de traitement et de reconstruction mathématique.

Selon l'invention, la pièce mécanique à analyser est en matériau composite comprenant une préforme en matériaux fibreux dans laquelle est injectée une résine.

Le procédé selon l'invention consiste à incorporer des particules métalliques à la préforme ou à la résine lors de la fabrication de la pièce. L'intégration de particules métalliques à l'intérieur de la pièce permet de former des hétérogénéités de densité au sein de la pièce lesquelles induisent des hétérogénéités d'atténuation des rayons X qui sont visibles sur les images d'atténuation enregistrées par les détecteurs aux différentes positions angulaires de la pièce. Ces particules métalliques forment ainsi une microstructure tridimensionnelle qu'il est possible d'identifier par tomographie à rayons X.

En appliquant une procédure mathématique de reconstruction tomographique connue de l'homme du métier, il est possible, à partir des images d'atténuation aux différentes positions angulaires du support, d'obtenir un relevé tridimensionnel des positions des particules métalliques au sein de la pièce.

Le procédé selon l'invention consiste à soumettre la pièce à un contrôle non destructif par tomographie à rayons X à un premier instant et à obtenir un premier relevé tridimensionnel des positions des particules métalliques au sein de la pièce. A un instant ultérieur, on effectue un second contrôle par tomographie à rayons X pour obtenir un second relevé tridimensionnel des positions des particules.

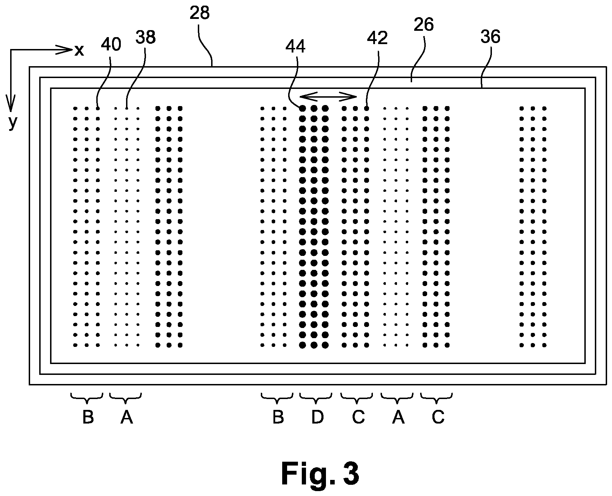

Par comparaison des premier et second relevés, on peut identifier la pièce et mesurer les déformations internes de celle-ci comme cela apparaîtra plus clairement en référence aux figures 2 et 3 décrivant deux réalisations particulières du procédé.

Dans une première réalisation du procédé selon l'invention représentée en figure 2, les particules métalliques 22 sont incorporées au flux de résine 24 et le mélange résine-particules est injecté à l'intérieur de la préforme fibreuse 26.

Pour cela, le moule d'injection 28 de résine 24, dans lequel est logé la préforme 26, est relié à l'extrémité aval d'un canal 30 d'écoulement du flux de résine 24. Les particules métalliques 22 sont incorporées à la résine 24 par l'intermédiaire d'un canal auxiliaire 32 sur lequel sont prévus des moyens de contrôle du débit 34 des particules 22 dans le flux de résine 24.

Ainsi, en contrôlant le débit de particules 22, on peut contrôler la répartition des particules 22 à l'intérieur de la préforme 26 au fur et à mesure de l'injection du mélange dans la préforme 26. Il est ainsi possible de faire en sorte qu'une pièce présente une première répartition de particules à l'intérieur de sa préforme et qu'une autre pièce présente une autre répartition de particules différente de la première répartition. Il s'ensuit que les pièces ainsi formées ont des microstructures de particules différentes. Le contrôle par tomographie des deux pièces permet d'obtenir des relevés tridimensionnel de particules différents, ce qui permet de différencier les deux pièces quand bien même ces deux pièces seraient de même nature, c'est-à-dire par exemple deux aubes.

Le débit de particules peut soit être constant au cours de l'injection de la résine 24 pour avoir une répartition sensiblement uniforme des particules au sein de la préforme 26 ou peut être variable au cours de l'injection de résine 24 pour avoir une répartition des particules 22 selon un motif correspondant à la variation du débit de particules 22. Dans le premier cas d'un débit constant, on pourra choisir un débit Q1 pour une pièce donnée et un débit Q2 différent pour une seconde pièce donnée pour les différencier par tomographie par rayons X.

Les particules 22 injectées dans le flux de résine 24 peuvent être réalisées dans des matériaux identiques ou différents et/ou avoir des diamètres différents.

Dans une seconde réalisation du procédé selon l'invention, les particules 22 sont incorporées à la préforme en étant déposées à sa surface au moyen d'un tamis 36 préalablement à l'injection de résine à l'intérieur de la préforme 26.

Pour cela, la préforme est pré-positionnée dans son moule d'injection 28 et le tamis 36 est positionné dans un plan horizontal XY à une distance minimale évitant tout contact entre le tamis 36 et la préforme 26. En pratique, cette distance est supérieure à 2 centimètres. Elle est préférentiellement également inférieure à 50 centimètres.

Le tamis 36 comprend une pluralité d'orifices 38, 40, 42, 44 de diamètres différents répartis selon un motif prédéterminé correspondant à la répartition souhaitée des particules sur la préforme 26.

Le tamis 36 représenté en figure 3 comprend plusieurs groupes A, B, C, D de rangées d'orifices de mêmes diamètres, ces groupes étant espacés les uns des autres selon la direction X. Chaque groupe A, B, C, D comprend trois rangées d'orifices de même diamètre. Certains groupes A sont formés avec des rangées d'orifices 38 de très petit diamètre et par exemple compris entre 20 et 50 $\mu$m. D'autres groupes B sont formés avec des rangées d'orifices 40 de petit diamètre et par exemple compris entre 50 et 80 $\mu$m. Encore d'autres groupes C sont formés de rangées d'orifices 42 de diamètre moyen et par exemple compris entre 80 et 150 $\mu$m. Enfin, un dernier groupe D est formé avec des rangées d'orifices 44 de grand diamètre et par exemple compris entre 150 et 300 $\mu$m.

Un support (non représenté) peut être agencé au dessus du tamis et comprendre des cloisons séparant les différents groupes d'orifices A, B, C et D coopérant chacun avec des moyens d'amenée des particules de manière à ce que les orifices de chaque groupe A, B, C et D ne soit alimenté qu'avec un diamètre donné de particules.

Les particules de différents diamètres peuvent également être amenées simultanément sur toute la surface du tamis de sorte que des particules de très petits diamètres peuvent passer à travers tous les orifices des groupes A, B, C et D.

Dans d'autres réalisations de tamis, les orifices pourraient présenter une répartition différente et sous forme de rangées d'orifices de mêmes diamètres, ces rangées étant espacées les unes des autres selon la direction X. Dans encore d'autres réalisations, les orifices pourraient être alignés suivant des lignes courbes et non plus des lignes droites. On comprend que de nombreux motifs de tamis peuvent être réalisés pour obtenir des répartitions souhaitées des particules sur les préformes.

On comprend que la répartition des orifices et la variation de leurs diamètres participent à une définition d'une microstructure unique de particules sur la préforme qui peut être détectée par tomographie à rayons X pour l'identification d'une pièce donnée.

En utilisant un tamis différent pour chaque pièce, il serait possible de différencier les pièces les unes des autres par un contrôle par tomographie par rayons X.

Notons qu'il est également possible de différencier les pièces les unes des autres en utilisant un seul et unique tamis en faisant par exemple varier le positionnement initial du tamis au dessus de la préforme et en faisant varier son mouvement au dessus de la pièce.

Le tamis peut être déplacé selon un mouvement de va et vient en translation au dessus de la préforme sur une distance comprise entre 0,5 et 5 cm par exemple. Le déplacement du tamis peut être adapté en fonction de la taille de la pièce et du positionnement et du recouvrement souhaités des particules sur la préforme.

Les particules déposées sur la préforme 26 peuvent être soit en un même matériau soit en des matériaux différents.

Après incorporation des particules à la préforme 26 par l'intermédiaire du flux de résine ou bien après dépôt par tamisage, le procédé selon l'invention peut également comprendre une étape consistant à donner une ou des orientations prédéterminées aux particules métalliques par application d'un champ magnétique.

Dans une réalisation pratique de l'invention, les particules métalliques sont choisies parmi le titane, le nickel, l'aluminium, le chrome et le fer.

Dans une réalisation pratique de l'invention, les particules peuvent avoir un diamètre compris entre environ 20 microns et 300 microns.

En pratique, les particules doivent avoir un diamètre d vérifiant l'équation suivante :

$$\frac{R}{10} < d < R$$

où : R est la résolution du dispositif de tomographie par rayons X.

Cette équation est applicable pour les matériaux ayant une densité comprise entre 2 et $10 g/cm^3$.

D'une manière générale et bien connue de l'homme du métier, la détectabilité des particules par tomographie par rayons X est fonction de la densité et du diamètre des particules.

Selon l'invention, en intégrant des particules métalliques à la préforme fibreuse, il est possible de réaliser une identification d'une pièce mécanique parmi d'autres au moyen de la microstructure interne tridimensionnelle formée par les particules métalliques. Pour une pièce donnée, en comparant la microstructure tridimensionnelle des particules métalliques à différents instants, il est également possible d'en déduire la déformation de la structure interne de la pièce au cours du temps.

De nombreuses formes de microstructures de particules peuvent être obtenues en utilisant :

- des particules de densités différentes, c'est-à-dire des particules de matériaux différents ; et/ou
- des particules de diamètres différents ;
- et/ou des répartitions différentes des particules à l'intérieur de la pièce.

Dans une autre réalisation de l'invention, il serait possible de combiner l'introduction de particules dans la préforme comme décrit en référence à la figure 2 avec une incorporation de particules métalliques à la préforme à l'aide d'un tamis comme décrit en référence à la figure 3.

Dans le cas particulier où les particules sont agencées de manière unique, il serait également envisageable d'effectuer une acquisition des rayons X transmis à travers la pièce pour une seule position de la source de rayons X et du détecteur. Dans ce cas, on obtient une image d'atténuation des rayons X transmis à travers la pièce 14 qui permet de distinguer la pièce analysée par rapport à une autre pièce ayant un agencement différent des particules.

Notons que l'utilisation d'une simple image d'atténuation des rayons X peut permettre d'apprécier les déformations de la structure interne de la pièce. Toutefois, pour accéder précisément aux déformations internes de la pièce, il est nécessaire d'effectuer un contrôle par tomographie par rayons X comme exposé précédemment de manière à disposer de relevés tridimensionnels des positions des particules dans la pièce.

Le procédé selon l'invention est également intéressant dans le cadre d'une opération d'usinage conduisant à une libération de contraintes résiduelles à l'intérieur du matériau. A cette fin, le procédé selon l'invention peut être appliqué en effectuant un contrôle par tomographie à rayons X avant l'opération d'usinage et un second contrôle après l'opération d'usinage sur une pièce comprenant une microstructure de particules métalliques, ce qui permet ensuite d'évaluer l'impact de la libération des contraintes sur la structure interne de la pièce par comparaison des relevés tridimensionnels des positions des particules avant et après usinage.

Le procédé selon l'invention est également intéressant pour l'examen d'une pièce ayant subie une élévation de température qui peut également conduire à une libération de contraintes résiduelles.

## Revendications

**1.** Procédé d'identification et/ou de suivi des déformations d'une pièce mécanique (14) en matériau composite pour turbomachine, la pièce comprenant une préforme (26) en matériau fibreux et une résine (24), **caractérisé en ce qu'**il consiste à :

- incorporer des particules métalliques (22) à la préforme et/ou à la résine (24) lors de la fabrication de la pièce (14) ;
- soumettre la pièce mécanique (14) à un premier contrôle par rayons X de manière à obtenir une première information relative aux positions des particules à sein de la pièce; puis
- soumettre la pièce mécanique (14) à un deuxième contrôle par rayons X à un instant ultérieur de manière à obtenir une seconde information relative aux positions des particules à sein de la pièce; et
- identifier la pièce (14) et/ou déduire la déformation de sa structure interne par comparaison des première et seconde informations relatives aux positions des particules au sein de la pièce obtenues avec les premier et second contrôles par rayons X, respectivement.

2. Procédé selon la revendication 1, **caractérisé en ce que** les premier et second contrôle par rayons X consistent en des contrôles par tomographie à rayons X de manière à obtenir des premier et second relevés tridimensionnels des positions des particules métalliques au sein de la pièce, respectivement.

3. Procédé selon la revendication 1 ou 2, **caractérisé en ce que** la première information est obtenue sur la pièce mécanique (14) préalablement à toute utilisation de celle-ci.

4. Procédé selon l'une des revendications 1 à 3, **caractérisé en ce qu'**au moins certaines des particules métalliques (22) sont introduites dans un canal d'écoulement (30) d'un flux de résine (24) dont l'extrémité aval débouche à l'intérieur d'un moule (28) logeant la préforme (26) en matériau fibreux.

5. Procédé selon la revendication 4, **caractérisé en ce qu'**il comprend des moyens de contrôle du débit (34) de particules métalliques (22) dans le flux de résine.

6. Procédé selon l'une des revendications précédentes, **caractérisé en ce qu'**il consiste à déposer au moins certaines des particules (22) sur la préforme (26) avant injection de la résine (24).

7. Procédé selon la revendication 6, **caractérisé en ce que** les particules (22) sont déposés sur la préforme (26) au moyen d'un tamis (36) comprenant une pluralité d'orifices (38, 40, 42, 44) de diamètres différents répartis selon un motif prédéterminé.

8. Procédé selon l'une des revendications précédentes, **caractérisé en ce qu'**il consiste à donner une ou des orientations prédéterminées aux particules (22) par application d'un champ magnétique.

9. Procédé selon l'une des revendications précédentes, **caractérisé en ce que** les particules (22) ont une densité supérieure à celles de la préforme et de la résine.

10. Procédé selon l'une des revendications précédentes, **caractérisé en ce que** la pièce (14) est une aube de turbomachine.

**Patentansprüche**

1. Verfahren zum Identifizieren und/oder Nachverfolgen von Verformungen eines mechanischen Bauteils (14) aus Verbundmaterial für Turbomaschinen bzw. Turbotriebwerke, wobei das Bauteil eine Vorform (26) aus Fasermaterial und ein Harz (24) enthält, **dadurch gekennzeichnet, dass** es darin besteht, dass:

- der Vorform und/oder dem Harz (24) beim Herstellen des Bauteils (14) Metallpartikel (22) zugesetzt werden;
- das mechanische Bauteil (14) einer ersten Röntgenprüfung unterzogen wird, so dass eine erste Information bezüglich der Positionen der Partikel innerhalb des Bauteils erhalten wird; dann
- das mechanische Bauteil (14) einer zweiten Röntgenprüfung zu einem späteren Zeitpunkt unterzogen wird, so dass eine zweite Information bezüglich der Positionen der Partikel innerhalb des Bauteils erhalten wird; und
- das Bauteil (14) identifiziert wird und/oder die Verformung seiner inneren Struktur durch Vergleich der ersten und der zweiten Information bezüglich der Positionen der Partikel innerhalb des Bauteils, die mit der ersten und der zweiten Röntgenprüfung erhalten wurden, abgeleitet wird.

2. Verfahren nach Anspruch 1, **dadurch gekennzeichnet, dass** die erste und die zweite Röntgenprüfung aus Prüfungen mittels Röntgentomographie bestehen, so dass jeweils eine erste und eine zweite 3D-Aufnahme der Positionen der Metallpartikel innerhalb des Bauteils erhalten werden.

3. Verfahren nach Anspruch 1 oder 2, **dadurch gekennzeichnet, dass** die erste Information am mechanischen Bauteil (14) vor jeglicher Verwendung desselben erhalten wird.

**4.** Verfahren nach einem der Ansprüche 1 bis 3, **dadurch gekennzeichnet, dass** zumindest bestimmte der Metallpartikel (22) in einen Strömungskanal (30) eines Harzstroms (24) eingeführt werden, dessen stromabwärtiges Ende im Inneren einer Gießform (28) ausmündet, welche die Vorform (26) aus Fasermaterial aufnimmt.

**5.** Verfahren nach Anspruch 4, **dadurch gekennzeichnet, dass** es Einrichtungen zum Steuern der Durchfluss (34) der Metallpartikel (22) im Harzstrom umfasst.

**6.** Verfahren nach einem der vorangehenden Ansprüche, **dadurch gekennzeichnet, dass** es darin besteht, vor dem Einspritzen von Harz (24) zumindest bestimmte der Partikel (22) auf die Vorform (26) abzulegen.

**7.** Verfahren nach Anspruch 6, **dadurch gekennzeichnet**, die Partikel (22) mittels eines Siebs (36) auf die Vorform (26) abgelegt werden, das eine Mehrzahl von Öffnungen (38, 40, 42, 44) mit unterschiedlichen Durchmessern aufweist, die nach einem vorbestimmten Muster verteilt sind.

**8.** Verfahren nach einem der vorangehenden Ansprüche, **dadurch gekennzeichnet, dass** es darin besteht, den Partikeln (22) durch Anwendung eines Magnetfelds eine oder mehrere vorbestimmte Ausrichtungen zu verleihen.

**9.** Verfahren nach einem der vorangehenden Ansprüche, **dadurch gekennzeichnet, dass** die Partikel (22) eine höher Dichte als die Vorform und das Harz haben.

**10.** Verfahren nach einem der vorangehenden Ansprüche, **dadurch gekennzeichnet, dass** das Bauteil (14) eine Schaufel einer Turbomaschine bzw. eines Turbotriebwerks ist.

**Claims**

**1.** A method of identifying and/or tracking deformation in a mechanical part (14) made of composite material for a turbine engine, the part comprising a preform (26) of fiber material together with resin (24), the method being **characterized in that** it consists in:

• incorporating metallic particles (22) in the preform and/or the resin (24) while fabricating the part (14) ;
• subjecting the mechanical part (14) to a first X-ray inspection so as to obtain first information about the positions of particles within the part; then
• subjecting the mechanical part (14) to a second X-ray inspection on a later occasion so as to obtain second information about the positions of particles within the part; and
• identifying the part (14) and/or deducing the deformation of its internal structure by comparing the first and second information about the positions of particles within the part as obtained respectively with the first X-ray and the second X-ray inspections.

**2.** A method according to claim 1, **characterized in that** the first and second X-ray inspections consist in X-ray tomography inspections so as to obtain respective first and second three-dimensional measurements of the positions of metal particles within the part.

**3.** A method according to claim 1 or claim 2, **characterized in that** the first information is obtained from the mechanical part (14) before any use is made thereof.

**4.** A method according to any one of claims 1 to 3, **characterized in that** at least some of the metallic particles (22) are introduced into a flow channel (30) for a stream of resin (24) having its downstream end leading into a mold (28) housing the preform (26) of fiber material.

**5.** A method according to claim 4, **characterized in that** it includes means (34) for controlling the flow rate of metal particles (22) in the stream of resin.

**6.** A method according to any preceding claim, **characterized in that** it consists in depositing at least some of the particles (22) on the preform (26) prior to injecting the resin (24).

**7.** A method according to claim 6, **characterized in that** the particles (22) are deposited on the preform (26) by means of a screen (36) having a plurality of orifices (38, 40, 42, 44) of different diameters distributed in a predetermined pattern.

**8.** A method according to any preceding claim, **characterized in that** it consists in giving one or more predetermined orientations to the particles (22) by applying a magnetic field.

**9.** A method according to any preceding claim, **characterized in that** the particles (22) are of density greater than the densities of the preform and of the resin.

**10.** A method according to any preceding claim, **characterized in that** the part (14) is a turbine engine blade or vane.

**Fig. 1**

**Fig. 2**

Fig. 3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2971970
- EP 0905509 A
- US 20120025827 A